# EUROPÄISCHE PATENTSCHRIFT

(11) **EP 0 702 263 B1**
(45) Veröffentlichungstag und Bekanntmachung des Hinweises auf die Patenterteilung: **24.10.2001**
(21) Anmeldenummer: 94810535.8
(22) Anmeldetag: 15.09.1994
(51) Int. Cl.: G03B 27/46, G03B 15/00, G03B 27/32

(54) **Fotografisches Kopiergerät**
Photographic printer
Tireuse photographique

(43) Veröffentlichungstag der Anmeldung: 20.03.1996
(73) Patentinhaber: GRETAG IMAGING AG, 8105 Regensdorf (CH)
(72) Erfinder: Frick, Beat, Dr., CH-8107 Buchs (CH); Rotach, Hansjörg, CH-8307 Effretikon (CH); Heller, Martin, CH-8050 Zürich (CH)
(74) Vertreter: Schwabe - Sandmair - Marx

(56) Entgegenhaltungen:
- EP-A- 0 308 967
- DE-A- 3 820 799
- US-A- 4 786 944
- PATENT ABSTRACTS OF JAPAN vol. 13, no. 73 (P-830) 20. Februar 1989 & JP-A-63 257 742 (FUJI PHOTO FILM CO LTD.) 25. Oktober 1988
- PATENT ABSTRACTS OF JAPAN vol. 14, no. 183 (P-1035) 12. April 1990 & JP-A-02 029 728 (FUJI PHOTO FILM CO. LTD.) 31. Januar 1990
- PATENT ABSTRACTS OF JAPAN vol. 7, no. 234 (P-230) 18. Oktober 1983 & JP-A-58 122 529 (CANON K.K.) 21. Juli 1983

## Beschreibung

Die Erfindung betrifft ein fotografisches Kopiergerät, insbesondere ein fotografisches Kombi-Kopiergerät zum wahlweisen Aufbelichten von Negativ- oder Positivkopiervorlagen und/oder eines Kathodenstrahlröhrenbildes auf fotografisches Kopiermaterial, gemäss Oberbegriff des Patentanspruchs 1.

In der modernen fotoverarbeitenden Industrie müssen neben Abzügen von Negativ- oder Positivfilmmaterial vielfach auch Abzüge von auf elektronischen Medien gespeicherten Bildern erstellt werden. Dies können Bilder aus Videofilmen oder von sogenannten "Still-Video" Systemen sein. Auch in der konventionellen Fotografie mit Positiv- oder Negativfilmen geht der Trend dahin, die aufgenommenen Bilder nachträglich auf ein elektronisches Speichermedium zu übertragen, welches es erlaubt, die Bilder über ein Fernsehgerät oder einen Monitor einer elektronischen Datenverarbeitungsanlage wiederzugeben oder mit Hilfe von speziellen Routinen auf der elektronischen Datenverarbeitungsanlage beispielsweise künstlerisch zu bearbeiten und anschliessend darzustellen. In jüngster Zeit sind daher Geräte bekannt geworden, welche es erlauben, Abzüge von auf Bildschirmen dargestellten Bildern zu erstellen.

Um dem Wunsch nach einem wahlweisen Aufbelichten von Negativ- oder Positivkopiervorlagen und/oder eines Bildschirmbildes auf fotografisches Kopiermaterial in einem einzigen Gerät nachkommen zu können, ist in der US-A-4,742,375 ein fotografisches Kombigerät beschrieben, welches mit einer konventionellen Belichtungseinrichtung für Negativ- oder Positivfilme ausgerüstet ist, und welches zusätzlich eine weitere Belichtungseinrichtung aufweist, mit der Bildschirmbilder auf Fotopapier aufbelichtet werden können. Diese zusätzliche Belichtungseinrichtung umfasst eine Kathodenstrahlröhre, eine spezielle Abbildungsoptik und geeignete Filter, um die für die Erstellung eines Farbabzuges erforderlichen Belichtungen in den drei Grundfarben Blau, Grün und Rot ausführen zu können.

In der Druckschrift sind verschiedene Ausführungsvarianten eines derartigen Kombigeräts beschrieben. Bei der zweckmässigsten und platzsparendsten Variante ist die Kathodenstrahlröhre gegenüber dem Belichtungsstrahlengang der konventionellen Belichtungseinrichtung um 90° geneigt angeordnet. Das von der Kathodenstrahlröhre kommende Licht wird durch das zugehörige Objektiv und die Filter geleitet und danach von einem einschwenkbaren Umlenkspiegel auf das Fotopapier geleitet. Die Kathodenstrahlröhre, das Objektiv, die Filter und der Umlenkspiegel sind an den entsprechenden Positionen innerhalb des Geräts befestigt und müssen exakt zueinander und bezüglich des zu belichtenden Fotopapierabschnitts justiert sein, um die von der Kathodenstrahlröhre projizierte Bildvorlage scharf und im richtigen gewünschten Massstab auf das Fotopapier aufbelichten zu können.

Während bei fabriksmässig bereitgestellten Kombigeräten die Justierung vom Fachpersonal und mit spezieller Ausrüstung in der Fabrik gut ausgeführt werden kann, ist dies für das Service-Personal am Aufstellort relativ schwierig durchzuführen. Eine Nachjustierung kann beispielsweise aufgrund von Verstellungen beim Transport des Geräts erforderlich sein. Vielfach wünschen Fotolabors, dass ihre bestehenden konventionellen Kopiergeräte aufgewertet und mit einer Belichtungseinrichtung für Bildschirmvorlagen nachgerüstet werden. Es versteht sich, dass zu diesem Zweck die Geräte nicht an den Hersteller zurückgeliefert werden, sondern dass die Kopiergeräte vielmehr an Ort und Stelle umgebaut werden. Dabei ist zu berücksichtigen, dass ein derartiger Umbau sehr schnell erfolgen muss, um das Gerät möglichst schnell wieder einsatzbereit zu haben. Bei dem bekannten Kombi-Kopiergerät müssen jedoch sämtliche optischen Baugruppen der zusätzlichen Kopiereinrichtung separat eingebaut und entsprechend justiert werden. Dies ist ein zeitaufwendiger Vorgang und bedingt relativ lange Stehzeiten des Kopiergeräts, in denen es für für die Erstellung von Abzügen nicht zur Verfügung steht.

Ein weiteres Problem bei der von dem bekannten Kombi-Kopiergerät vorgeschlagenen Anordnung besteht darin, dass die einzelnen optischen Baugruppen relativ ungeschützt innerhalb des Geräts angeordnet sind. Dadurch können sie relativ leicht verstauben, was eine häufigere Reinigung der Baugruppen erfordert. Durch die separate und relativ ungeschützte Anordnung der optischen Baugruppen für die zusätzlichen Belichtungseinrichtung besteht auch die Gefahr des Eintritts oder des Austritts von Streulicht bzw. Fehllicht, was sich sehr negativ auf die Erstellung von Abzügen auswirken kann.

Die JP 58-122529 nebst zugehörigem Patent Abstract of Japan stellt ein fotografisches Kopiergerät vor, dem die im Oberbegriff des Patentanspruchs 1 aufgeführten Merkmale zu entnehmen sind. Bei diesem Kopiergerät sind zwei optische Wege vorgesehen. Einer dieser optischen Wege dient für ein herkömmliche Durchlichtbelichtung, während der andere optische Weg für die Belichtung mittels eines zu einem Bild gewandelten Videosignals dient. Für die Durchlichtbelichtung ist eine Anordnung mit einem Lampengehäuse, einem Farbkorrekturfilter, einer Kondensorlinse und einer Fokussierungslinse vorgesehen. Zur Umwandlung des Videosignales dient eine Kathodenstrahlröhre, die über eine Farbfilterscheibe und ein optisches System sowie ein Umlenkspiegel in der Form eines halbdurchlässigen Spiegels das Videosignal auf ein Fotopapier wirft. Der halbdurchlässige Spiegel dient auch für den Durchlichtbelichtungsweg, so dass die Belichtungswege jenseits des halbdurchlässigen Spiegels übereinstimmen.

Es besteht daher die Aufgabe ein Kombi-Kopiergerät der gattungsgemässen Art derart zu verbessern, dass den geschilderten Nachteilen abgeholfen wird. Das erfindungsgemässe fotografische Kombi-Kopiergerät soll einen einfachen Aufbau aufweisen, welcher es erlaubt, die zusätzliche Belichtungseinrichtung sowohl in der Herstellerfabrik als auch beim Kunden ohne übergrossen technischen und zeitlichen Aufwand einzubauen. Die optischen Baugruppen der zusätzlichen Belichtungseinrichtung, wie beispielsweise Farbfilter, Umlenkspiegel und Objektiv, sollen derart angeordnet sein, dass Streu- und Fehllicht weitgehend vermieden wird und die Gefahr von Verstaubung oder Verschmutzung der optischen Baugruppen reduziert wird.

Die Lösung dieser und noch weiterer damit zusammenhängender Aufgaben erfolgt durch ein fotografisches Kopiergerät, welches die im kennzeichnenden Teil des Patentanspruchs 1 angeführten Merkmale aufweist. Weitere besonders bevorzugte Ausführungsvarianten des erfindungsgemässen fotografischen Kopiergeräts sind Gegenstand der abhängigen Patentansprüche.

Das fotografisches Kopiergerät ist als Kombi-Kopiergerät ausgebildet und weist eine erste Belichtungseinrichtung zum Aufbelichten von fotografischen Negativ- oder Positivvorlagen und eine zweite Belichtungseinrichtung zum Aufbelichten von Bildschirmvorlagen auf fotografisches Kopiermaterial auf. Die zweite Belichtungseinrichtung umfasst eine etwa im rechten Winkel zum Belichtungsstrahlengang der ersten Belichtungseinrichtung angeordnete Kathodenstrahlröhre samt Ansteuersystem, eine Anordnung von Farbfiltern, ein Objektiv und einen Umlenkspiegel, mit Hilfe dessen die von der Kathodenstrahlröhre emittierte Bildschirmvorlage auf das fotografische Kopiermaterial lenkbar ist. Die Farbfilteranordnung, das Objektiv und der Umlenkspiegel sind erfindungsgemäss als bauliche Einheit zu einer Abbildungsoptik zusammengefasst, die wahlweise an Stelle eines der ersten Belichtungseinrichtung zugehörigen Abbildungsobjektivs in den Belichtungsstrahlengang einbringbar ist.

Die erfindungsgemässe Anordnung und Ausbildung der Filteranordnung, des Objektivs und des Umlenkspiegels als bauliche Einheit resultiert in einem kompakten Bauelement, welches als Gesamtheit in den Belichtungsstrahlengang einbringbar ist. Die Filteranordnung, das Objektiv und der Umlenkspiegel werden getrennt vom Kopiergerät in Bezug aufeinander justiert und zusammengebaut. Erst die zusammengebaute und vorjustierte Baueinheit wird als kompakte Abbildungsoptik für die Kathodenstrahlröhre in das Kopiergerät eingebaut. Dies hat gegenüber dem Gerät des Stands der Technik den grossen Vorteil, dass die Abbildungsoptik für die Kathodenstrahlröhre unabhängig vom Kopiergerät vorgefertigt werden kann. Das Kopiergerät kann beispielsweise zunächst mit der Kathodenstrahlröhre samt der erforderlichen Ansteuerung ausgerüstet werden, danach wird die bereits vorjustierte und vorgefertigte Abbildungsoptik einfach an der dafür vorgesehenen Position im Gerät montiert. Dadurch wird der zeitliche und technische Aufwand für die Herstellung eines derartigen Kombi-Kopiergeräts nicht unbeträchtlich reduziert. Besonders vorteilhaft ist die erfindungsgemässe Ausbildung der Abbildungsoptik für das Umrüsten eines bereits im Fotolabor vorhandenen konventionellen Kopiergeräts. Dadurch dass Farbfilteranordnung, Abbildungsobjektiv und Umlenkspiegel als integriertes, vorjustiertes Bauteil vorliegen und eingebaut werden können, reduziert sich die Umrüstzeit und damit die Stehzeit des Kopiergeräts. Bestehende Geräte können ohne Beeinträchtigung der bestehenden Funktionen nachgerüstet werden.

Dadurch, dass die empfindlichen optischen Bauteile Farbfilteranordnung, Abbildungsobjektiv und Umlenkspiegel als bauliche Einheit ausgebildet sind, kann Streu- und Fehllicht wirksam unterbunden werden. Indem die optischen Bauteile zu einer kompakten vorjustierten Abbildungsoptik zusammengefasst sind, können sie auch einfacher und wirksamer gegen Staub und Verschmutzung geschützt werden.

Im folgenden wird die Erfindung mit allen ihr als wesentlich zugehörigen Einzelheiten unter Bezugnahme auf in den Zeichnungen dargestellte beispielsweise Ausführungsformen näher erläutert. Es zeigen in teilweise schematischer Darstellung:
- Fig. 1: einen Aufriss eines erfindungsgemässen fotografischen Kopiergeräts,
- Fig. 2: einen Schnitt des fotografischen Kopiergerätes gemäss Schnittlinie II-II in Fig. 1,
- Fig. 3: einen Aufriss des Kopiergerätes nach Fig. 1 mit eingeschwenkter zweiter Belichtungseinrichtung,
- Fig. 4: eine perspektivische Ansicht eines ersten Ausführungsbeispiels der erfindungsgemässen Abbildungsoptik der zweiten Belichtungseinrichtung,
- Fig. 5: eine Schnittdarstellung der Abbildungsoptik gemäss Fig. 4,
- Fig. 6: ein Filterkäfig mit Käfigwelle und Antriebszahnrad,
- Fig. 7: eine perspektivische Ansicht eines zweiten Ausführungsbeispiels der erfindungsgemässen Abbildungsoptik,
- Fig. 8: eine perspektivische Darstellung der Abbildungsoptik gemäss Fig. 7, wobei der Tubus und der Filterkäfig weggelassen sind, und
- Fig. 9: eine perspektivische Darstellung der Abbildungsoptik gemäss Fig. 7 aus entgegengesetzter Blickrichtung.

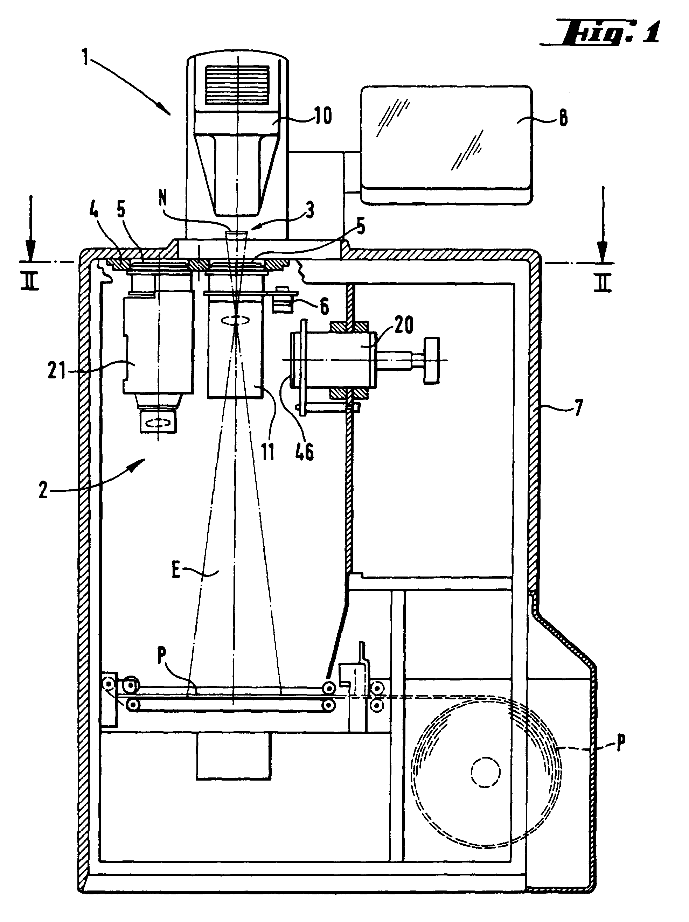

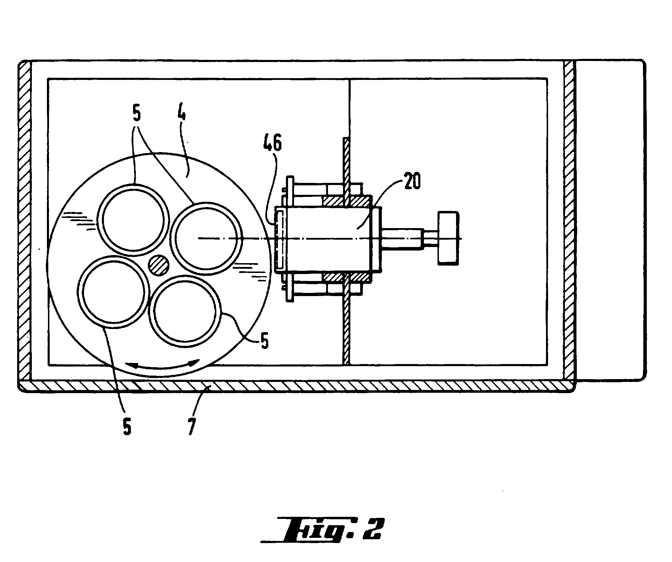

Das in den Figs. 1-3 beispielsweise dargestellte fotografische Kopiergerät entspricht weitgehend dem in einem Firmenprospekt der Anmelderin GRETAG IMAGING 98.25.68 BR 9402 en als "MASTERLAB" bezeichneten Gerät. Die Beschreibung des fotografischen Kopiergeräts beschränkt sich im folgenden daher auf die für das Verständnis der Erfindung wesentlichen Einzelheiten.

Wie in den Figs. 1-3 ersichtlich ist, umfasst das fotografische Kopiergerät ein Gehäuse 7, auf welches eine Bedienungskonsole 8 und ein Lampengehäuse 10 mit nicht dargestellter Belichtungslampe aufgesetzt ist. Eine an der Oberseite des Gehäuses 7 unterhalb des Lampengehäuses 10 angeordnete Filmbühne 3 ist zur Aufnahme und für den manuellen oder automatischen Transport von Kopiervorlagen N, beispielsweise Negativ- oder Positivfilmvorlagen vorgesehen. Innerhalb des Gehäuses 7 ist das fotografische Kopiermaterial P, üblicherweise Fotopapier, angeordnet, auf welches die Kopiervorlagen N aufbelichtet werden.

Bei dem beispielsweise dargestellten fotografischen Kopiergerät handelt es sich um ein Kombigerät, welches sowohl für das Aufbelichten von konventionellen Negativ- oder Positivfilmvorlagen, beispielsweise 135-er Negativ oder Diapositivfilm, alsauch für das Aufbelichten von Bildschirmbildern ausgebildet ist. Zu diesem Zweck ist das Kopiergerät mit zwei Belichtungseinheiten 1,2 ausgerüstet. Die erste Belichtungseinheit 1 umfasst neben der im Lampengehäuse 10 angeordneten Belichtungslampe wenigstens ein Abbildungsobjektiv 11, über welches eine Kopiervorlage im gewünschten Abbildungsmassstab auf das im Blichtungsstrahlengang E befindliche Kopiermaterial P aufbelichtet wird. Bei dem Abbildungsobjektiv 11 handelt es sich beispielsweise um ein Zoomobjektiv, dessen Brennweite mit Hilfe eines Zoomantriebs 6 verstellbar ist, um den gewünschten Abbildungsmassstab einzustellen. Es können auch noch weitere Abbildungsobjektive, beispielsweise Fixfocus-Objektive und/oder weitere Zoomobjektive vorgesehen sein, die an Ansteckplätzen 5 eines Objektivkarussells 4 befestigbar sind. Ein Objektivwechsel erfolgt einfach durch manuelle oder automatische Rotation des Objektivkarussells 4.

Die zweite Belichtungseinheit 2 umfasst eine etwa im rechten Winkel zum Belichtungsstrahlengang E der ersten Belichtungseinrichtung 1 angeordnete Kathodenstrahlröhre 20 samt Ansteuersystem (nicht dargestellt) mit einem Bildschirm 46, auf dem das abzubildende Bildschirmbild erzeugt wird. Das vom monochromen Bildschirm 46 kommende Licht wird durch eine Anordnung von Farbfiltern 22 für die Erzeugung der erforderlichen Kopierlichtmengen in den drei Grundfarben Rot, Grün und Blau geleitet und mit Hilfe eines Umlenkspiegels 23 in den Belichtungsstrahlengang E eingekoppelt. Ein Objektiv 24 projiziert das Bildschirmbild auf das fotografische Kopiermaterial P.

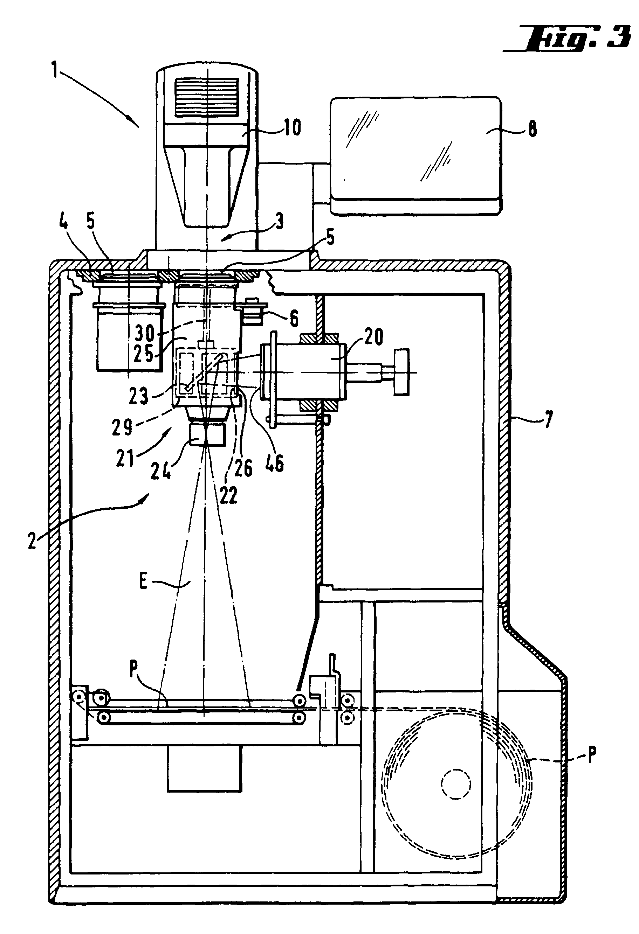

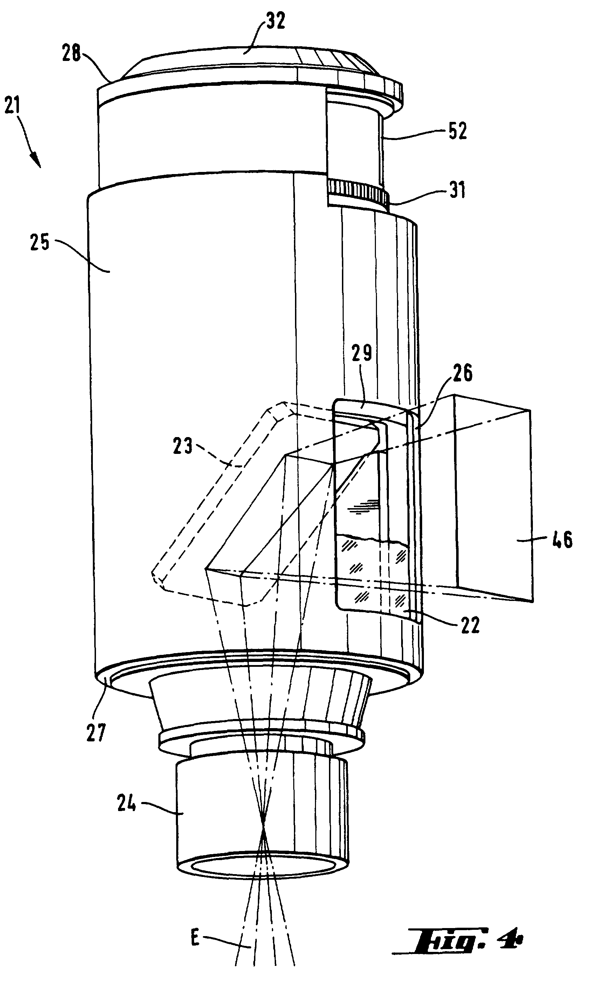

Wie in den Figs. 1 und 3 angedeutet und in den Figs. 4,5 bzw. 7,8 im Detail dargestellt, sind erfindungsgemäss die Farbfilteranordnung 22, der Umlenkspiegel 23 und das Objektiv 24 zu einer baulichen Einheit als Abbildungsoptik 21 zusammengefasst. Diese Abbildungsoptik 21 kann an Stelle des konventionellen Abbildungsobjektivs 11 in den Belichtungsstrahlengang E eingebracht werden, um auf diese Weise ein Bildschirmbild der Kathodenstrahlröhre 20 auf das Kopiermaterial P zu projizieren.

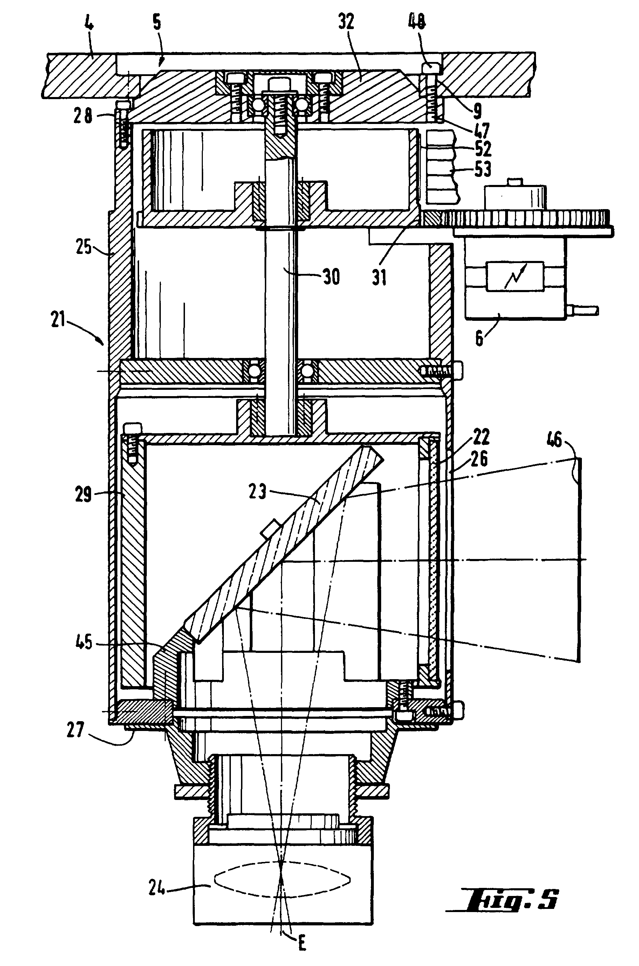

Die in den Figs. 4 und 5 dargestellte Abbildungsoptik 21 weist einen lichtdichten, vorzugsweise zylindrischen Tubus 25 auf, in dessen Mantel ein etwa rechteckförmiges Lichteintrittfenster 26 vorgesehen ist. Am einen stirnseitigen Ende 27 des Tubus 25 ist das Objektiv 24 befestigt. Der Umlenkspiegel 23 ist innerhalb des Tubus 25 auf einer Spiegelkonsole 45 befestigt die fest mit dem Tubus 25 verbunden ist. Der Umlenkspiegel 23 ist relativ zu dem Lichteintrittsfenster 26 feststehend angeordnet und ist gegenüber der Achse des Tubus 25 um etwa 45° geneigt befestigt, um das vom Bildschirm 46 der Kathodenstrahlröhre kommende Licht um etwa 90° in Richtung des Objektivs 24 umzulenken. Die Farbfilteranordnung 22 ist zwischen dem Lichteintrittsfenster 26 und dem Umlenkspiegel 23 vorgesehen. Auf diese Weise sind die Farbfilteranordnung 22, der Umlenkspiegel 23 und das Objektiv 24 in einer festen vorjustierten Beziehung zueinander und können gesamthaft in den Belichtungsstrahlengang E eingebracht werden. In dieser Betriebsstellung ist das Lichteintrittsfenster 26 des Tubus 25 dem Bildschirm 46 der Kathodenstrahlröhre zugewandt und liegt möglichst kurz vor diesem, um den Eintritt von Fehllicht zu vermeiden und möglichst viel des abgestrahlten Lichts aufzufangen. Aus Gründen der besseren Übersichtlichkeit wurde auf die Darstellung zusätzlicher Lichtdichtungen zwischen dem Bildschirm 46 und dem Tubus 25 verzichtet.

In einer bevorzugten Ausführungsvariante sind die Farbfilter 22 an einem innerhalb des Tubus 25 rotierbaren Filterkäfig 29 angeordnet, an dessen Umfang neben den Filtern 22 für die drei Grundfarben Rot, Grün und Blau auch je ein Bereich vorgesehen ist, welcher im Deckungszustand mit dem Lichteintrittsfenster 26 das vom Bildschirm 46 der Kathodenstrahlröhre kommende Licht ungehindert zum Umlenkspiegel 23 passieren lässt bzw. das Lichteintrittsfenster 26 verschliesst. Auf diese Weise kann die Filterung des Lichts für die Belichtung in den drei Grundfarben Rot, Grün und Blau sehr einfach durch Rotation des Filterkäfigs 29 erfolgen. Die zwei zusätzlichen Positionen des Filterkäfigs 29, in denen das Licht ungehindert passieren kann bzw. blockiert wird, dienen zur Kalibrierung des Gerätes. Wie aus der Darstellung in Fig. 5 ersichtlich ist der Filterkäfig 29 an einer Welle 30 befestigt, die sich axial zum der Objektivseite der Abbildungsoptik 21 abgewandten Stirnende 28 des Tubus 25 erstreckt. Dort ist die Welle in einer Zentrierung 32 gelagert, die den Tubus verschliesst. Die Zentrierung 32 ist mit Bohrungen 47 versehen, die mit entsprechenden Bohrungen 9 in dem Objektivkarussell 4 zur Deckung gebracht werden, um die Abbildungsoptik beispielsweise mit Hilfe von Schrauben 48 am entsprechenden Ansteckplatz 5 des Objektivkarussels 4 zu befestigen.

In einer bevorzugten Ausführungsvariante ist vor der Zentrierung 32 ein Zahnrad 31 fest mit der Käfigwelle 30 verbunden, welches in der Betriebstellung der Abbildungsoptik mit dem Zoomantrieb 6 in Eingriff steht. Auf diese Weise ist es nicht erforderlich, einen zusätzlichen Antrieb für den Filterkäfig 29 vorzusehen, sondern es kann der bereits im Gerät vorhandene Zoomtrieb 6 für die Rotation des Filterkäfigs 29 zur Einstellung der gewünschten Filterposition für die Belichtung in den drei Grundfarben Rot, Grün und Blau verwendet werden.

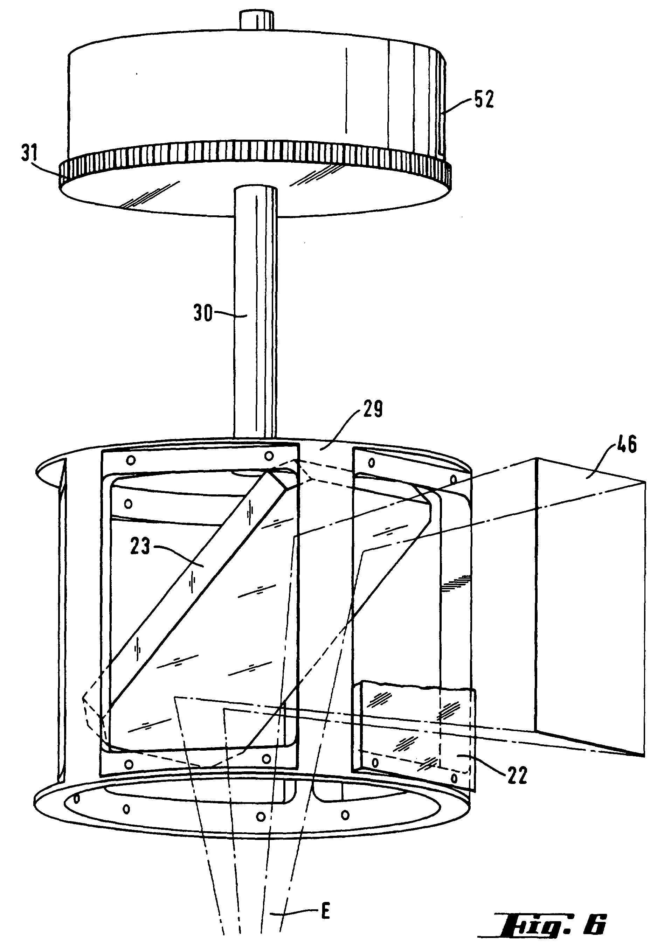

In Fig. 6 ist der Filterkäfig 29 separat dargestellt. Er weist etwa die Gestalt eines Zylindermantels auf, der mit vorzugsweise fünf gleichmässig entlang des Umfangs angeordneten Fenstern versehen ist. In der Figur sind die Fenster alle als Öffnungen dargestellt. Es versteht sich jedoch, dass in drei der Fenstern die erforderlichen Farbfilter eingesetzt sind, während ein Fenster mit einem lichtundurchlässigen Element blockiert wird. Eines der Fenster bleibt unbesetzt oder ist mit einem transparenten farblosen Element besetzt und lässt Licht ungehindert zum dahinter angeordneten Umlenkspiegel 23 passieren. Dieser ist in der Darstellung angedeutet. Seine Anordnung ist derart, dass vom Bildschirm 46 der Kathodenstrahlröhre emittiertes Licht auf den Spiegel 23 auftrifft und in Richtung des objektivseitig offenen Stirnendes des Filterkäfigs 29 umgelenkt wird. Das andere Stirnende des Filterkäfigs 29 ist fest mit der Käfigwelle 30 verbunden, an derem hinteren Ende das Zahnrad 31 befestigt ist, welches mit dem Zoomtrieb in Eingriff bringbar ist. Der Filterkäfig 29 ist derart bemessen, dass er ohne Behinderung durch den Umlenkspiegel 23 oder durch den Tubus 25 rotierbar ist.

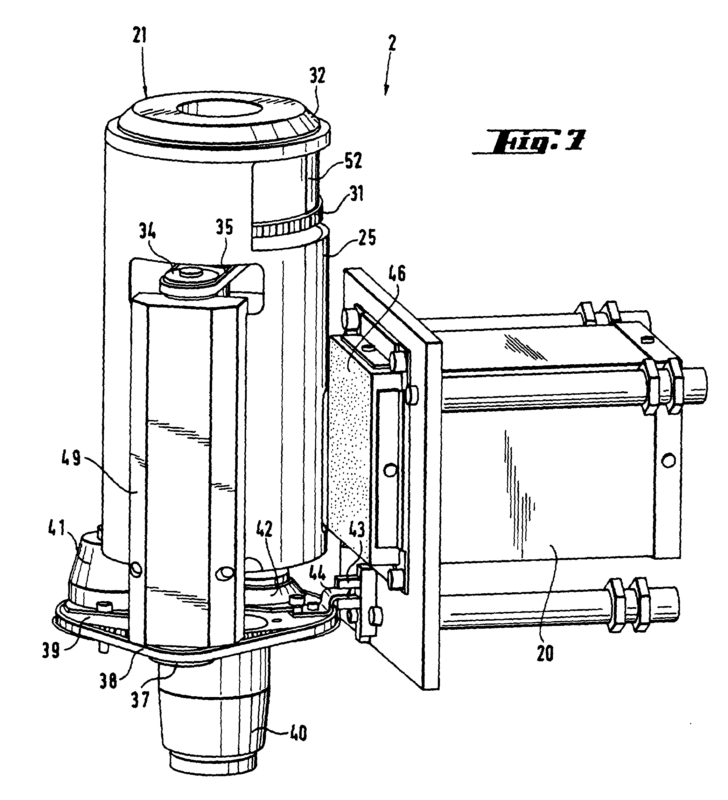

Das in den Figs. 7 bis 9 dargestellte Ausführungsbeispiel der Abbildungsoptik für die zweite Belichtungseinrichtung mit Kathodenstrahlröhre unterscheidet sich von dem in Figs. 4 und 5 dargestellten dadurch, dass an Stelle eines einzelnen Objektivs mit fester Brennweite ein Objektivteller 39 vorgesehen ist, auf dem eine Reihe von Objektiven, beispielsweise drei 40,41,42, mit unterschiedlichen Brennweiten angeordnet sind. Der Objektivwechsel zur Einstellung unterschiedlicher Abbildungsmassstäbe erfolgt einfach durch Rotation des Objektivtellers 39.

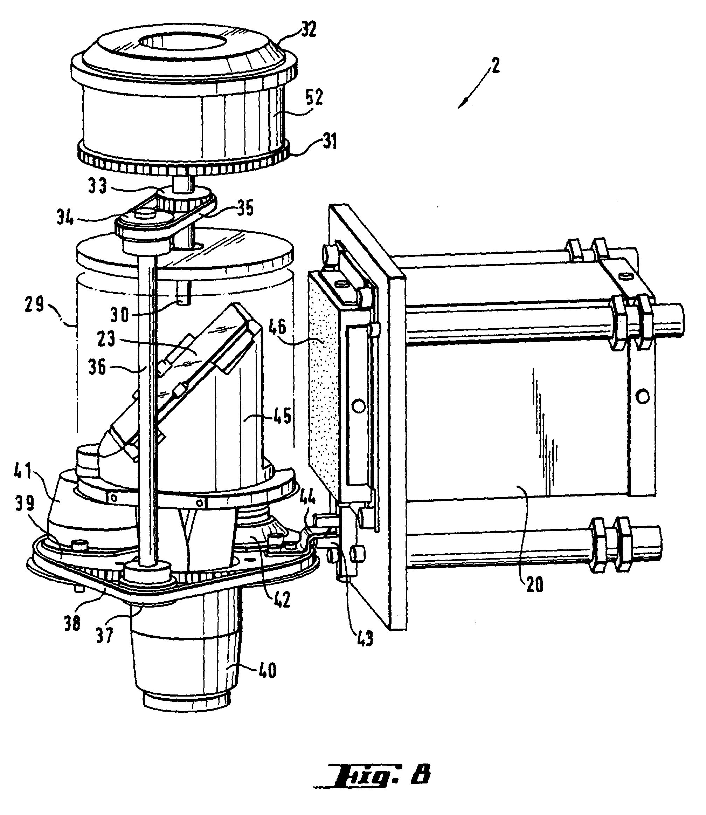

In einer besonders bevorzugten Ausführungsvariante der integrierten Abbildungsoptik 21 ist die Rotation des Objektivtellers 39 mit der Rotation des Filterrades 29 gekoppelt. Die Kopplung erfolgt dabei derart, dass ein Verdrehen des Filterkäfigs 29 in die eine Richtung eine Verstellung des Objektivtellers 39 und damit einen Objektivwechsel bewirkt, während eine Rotation des Filterkäfigs 29 in die Gegenrichtung über einen Freilauf einkoppelt vom Objektivteller 39 erfolgt und die Stellung des Objektivtellers 39 nicht verändert wird. Zu diesem Zweck ist, wie in Fig. 8, in der aus Übersichtlichkeitsgründen auf die Darstellung des Filterkäfigs 29 verzichtet wurde, gezeigt, unterhalb des Antriebszahnrades 31 für die Käfigwelle 30 ein Zahnrad 33 mit Freilauf vorgesehen. Dieses Zahnrad 33 mit Freilauf ist über einen Zahnriemen 35 mit einer Zahnscheibe 34 verbunden, die auf einer seitlichen Antriebswelle 36 sitzt. Die seitliche Antriebswelle 36 erstreckt sich achsparallel zur Käfigwelle 30 in Richtung Objektivteller 39 und ist am dortigen Ende mit einer weiteren Zahnscheibe 37 verbunden. Ein Zahnriemen 38 verbindet diese objektivseitige Zahnscheibe 37 und den Objektivteller 39.

Ein Verdrehen des Antriebszahnrades 31 in eine Richtung überträgt sich auf das Zahnrad 33 mit Freilauf. Die Rotation dieses Zahnrades 33 wird über den ersten Zahnriemen 35 und die obere Zahnscheibe 34 auf die seitliche Antriebswelle 36 übertragen. Die starr mit der Antriebswelle 36 verbundene objektivseitige Zahnscheibe 37 überträgt diese Rotation der seitlichen Antriebswelle 36 mit Hilfe eines zweiten Zahnriemens 38 auf den Objektivteller 39, der auf diese Weise in die gewünschte Position verstellt wird, um das Objektiv mit der gewünschten Brennweite in den Belichtungsstrahlengang zu schwenken. Die Stellung des Objektivtellers 39 wird mit einer Gabellichtschranke 43 überwacht, die beispielsweise unterhalb des Bildschirms 46 der Kathodenstrahlröhre 20 angeordnet ist, und mit einer auf dem Objektivteller 39 befestigten Fahne 44 in bekannter Weise zusammenwirkt. Der Filterkäfig 29 rotiert bei der Objektivverstellung mit und muss vor der nächsten Belichtung wieder in die Ausgangsposition gebracht werden. Dazu ist an dem Zahnrad 31 eine reflektierende Marke 52 vorgesehen, deren Stellung mit Hilfe einer Lichtschranke 53 detektiert wird. Vorzugsweise ist die reflektierende Marke 52 derart angebracht, dass bei ihrer Detektion der Lichtpfad gerade blockiert ist.

Wird das mit der Käfigwelle 30 starr verbundene Antriebszahnrad 31 in die Gegenrichtung angetrieben, kommt der Freilauf des darunter angeordneten Zahnrades 33 zum Tragen. Die Rotation der Käfigwelle wird nicht auf die seitliche Antriebswelle 36 und den Objektivteller 39 übertragen. Auf diese Weise kann der Filterkäfig in gewohnter Weise rotiert werden, um das Gerät zu kalibrieren und die Belichtungen in den drei Grundfarben Rot, Grün und Blau durchzuführen. Wie aus Fig. 7 ersichtlich, ist die seitliche Antriebswelle 36 mit den beiden Zahnscheiben 34 und 37 in einem Wellengehäuse 49 angeordnet, welches am Tubus 25 befestigt ist.

Die Kopplung der Drehung des Objektivtellers 39 mit der Rotation des Filterkäfigs 29 erlaubt es, für die Objektivverstellung den selben Antrieb zu benutzen wie für die Rotation des Filterkäfigs 29. In einer besonders bevorzugten Ausführungsvariante erfolgt die Verstellung der an der Stirnseite des Tubus 25 auf einem Objektivteller 39 angeordneten verschiedenen Objektive 40,41,42 mit unterschiedlichen Brennweiten daher gleichfalls mit dem Zoomantrieb 6, der bereits im Gerät zur Verstellung der Brennweite von konventionellen Zoomobjektiven 11 vorgesehen ist.

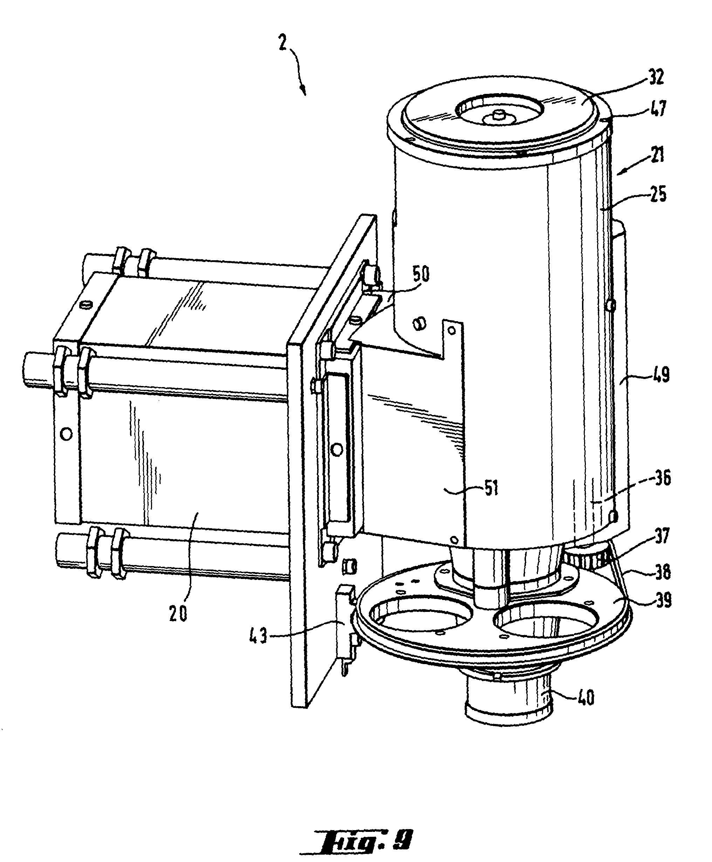

Wie in Fig. 9 angedeutet, ist zwischen dem Bildschirm 46 und dem Tubus 25 eine Lichtdichtung 50,51 vorgesehen, um Streulichteinfall gänzlich zu unterbinden. Bei dem dargestellten Ausführungsbeispiel umfasst die Lichtdichtung ein schirmseitiges Teil 50 und ein tubusseitiges Teil 51, welche im eingeschwenkten Zustand der Abbildungsoptik für die zweite Belichtungseinrichtung derart aneinander liegen, dass Streulichteinfall wirkungsvoll unterbunden wird.

Durch die erfindungsgemässe Ausbildung der Abbildungsoptik der zweiten Belichtungseinrichtung mit Kathodenstrahlröhre können bereits bestehende Austattungsmerkmale des fotografischen Kopiergeräts in optimaler Weise für die Betätigung zusätzlicher Elemente genutzt werden. Für die Betätigung der Farbfilteranordnung der zusätzlichen Abbildungsoptik ist kein zusätzlicher Antrieb erforderlich. Derselbe Antrieb kann auch für die Einstellung des gewünschten Objektivs an der Abbildungsoptik genutzt werden. Die erfindungsgemässe Anordnung und Ausbildung der Filteranodnung, des Objektivs und des Umlenkspiegels als bauliche Einheit resultiert in einer kompakten Abbildungsoptik, welche etwa die Form und Grösse eines konventionellen Zoomobjektives aufweist und als Gesamtheit in den Belichtungsstrahlengang einbringbar ist. Die Filteranordnung, das Objektiv und der Umlenkspiegel werden getrennt vom Kopiergerät in Bezug aufeinander justiert und zusammengebaut. Erst die zusammengebaute und vorjustierte Baueinheit wird als kompakte Abbildungsoptik für die Kathodenstrahlröhre in das Kopiergerät eingebaut. Dies hat gegenüber dem Gerät des Stands der Technik den grossen Vorteil, dass die Abbildungsoptik für die Kathodenstrahlröhre unabhängig vom Kopiergerät vorgefertigt werden kann. Das Kopiergerät kann beispielsweise zunächst mit der vorjustierten Aufnahmeplatte oder Kathodenstrahlröhre ausgerüstet werden, danach werden die bereits vorjustierte und vorgefertigte Abbildungsoptik und ggf. die Kathodenstrahlröhre einfach an der dafür vorgesehenen Positionen im Gerät montiert. Dadurch wird der zeitliche und technische Aufwand für die Herstellung eines derartigen Kombi-Kopiergeräts nicht unbeträchtlich reduziert Besonders vorteilhaft ist die erfindungsgemässe Ausbildung der Abbildungsoptik für das Umrüsten eines bereits im Fotolabor vorhandenen konventionellen Kopiergeräts. Dadurch dass Farbfilteranordnung, Objektiv und Umlenkspiegel als integriertes, vorjustiertes Bauteil vorliegen und eingebaut werden können, reduziert sich die Umrüstzeit und damit die Stehzeit des Kopiergeräts. Bestehende Geräte können ohne Beeinträchtigung der bestehenden Funktionen nachgerüstet werden.

Die kompakte Anordnung der optischen Elemente der zweiten Belichtungseinrichtung als Abbildungsoptik etwa von der Grösse eines konventionellen Zoomobjektivs erlaubt es, diese Optik neben anderen konventionellen Abbildungsobjektiven in einem Objektivkarussell anzuordnen. Der Wechsel zwischen den Objektiven erfolgt dann manuell oder automatisch durch Rotation des Karussells. Dabei ist es von Vorteil, wenn beim Wechsel von den konventionellen Abbildungsobjektiven der ersten konventionellen Belichtungseinrichtung zur Abbildungsoptik der zweiten Belichtungseinrichtung bzw. umgekehrt automatisch zwischen der Kathodenstrahlröhre und der konventionellen Lichtquelle umgeschaltet wird. Auf diese Weise können fehlerhafte Bedienungen, die zu Beschädigungen des Gerätes führen können, vermieden werden.

Die kompakte Ausbildung der Abbildungsoptik erlaubt es, Streu- und Fehllicht wirksam zu unterbinden. Indem die optischen Bauteile zu einer kompakten vorjustierten Abbildungsoptik zusammengefasst sind, können sie auch einfacher und wirksamer gegen Staub und Verschmutzung geschützt werden.

In einer bevorzugten Ausführungsvariante des fotografischen Kopiergerätes handelt es sich dabei um ein Kompaktlabor, welches zusätzlich mit einem Filmöffnungs- und Spleissmodul, einem Filmentwicklermodul, einem Papierentwicklermodul und einem Papierschneide- und Fotoausgabemodul ausgestattet ist. Auf diese Weise ist ein vielfältiges Gerät bereitgestellt, welches auf engstem Raum die Film- und Papierprozessoren integriert und den wahlweisen Betrieb als konventionelles Labor mit Negativ- oder Positivvorlagen und/oder einen Betrieb, in dem Bildschirmvorlagen auf Kopiermaterial aufbelichtet werden, erlaubt.

## Patentansprüche

1. Fotografisches Kopiergerät umfassend eine erste Belichtungseinrichtung (1) zum Aufbelichten von fotografischen Negativ- oder Positivvorlagen (N) und eine zweite Belichtungseinrichtung (2) zum Aufbelichten von Bildschirmvorlagen (46) auf fotografisches Kopiermaterial (P), wobei die zweite Belichtungseinrichtung (2) eine etwa im rechten Winkel zum Belichtungsstrahlengang (E) der ersten Belichtungseinrichtung (1) angeordnete Kathodenstrahlröhre (20) samt Ansteuersystem, eine Anordnung von Farbfiltern (22), ein Objektiv (24) und einen Umlenkspiegel (23) umfasst, mit Hilfe dessen die von der Kathodenstrahlröhre (20) emittierte Bildschirmvorlage (46) auf das fotografische Kopiermaterial (P) lenkbar ist, **dadurch gekennzeichnet, dass** die Farbfilteranordnung (22), das Objektiv (24) und der Umlenkspiegel (23) in Bezug aufeinander justiert und zusammengebaut sind, so dass diese als bauliche Einheit zu einer Abbildungsoptik (21) zusammengefasst sind, die wahlweise an Stelle eines der ersten Belichtungseinrichtung (1) zugehörigen Abbildungsobjektivs (11) in den Belichtungsstrahlengang (E) einbringbar ist und das bzw. die der ersten Belichtungseinrichtung (1) zugehörige(n) Abbildungsobjektiv(e) (11) und die zur zweiten Belichtungseinrichtung (2) gehörige Abbildungsoptik (21) an einem Objektivkarussell (4) befestigt sind und in den Belichtungsstrahlengang (E) einschwenkbar sind.

2. Vorrichtung nach Anspruch 1, **dadurch gekennzeichnet, dass** die Farbfilteranordnung (22), das Objektiv (24) und der Umlenkspiegel (23) in einem lichtdichten Tubus (25) angeordnet sind, in dessen Mantel ein Lichteintrittsfenster (26) vorgesehen ist, das in Betriebsstellung dem Bildschirm (46) der Kathodenstrahlröhre (20) zugewandt ist, und an dessen einem stirnseitigen Ende (27) das Objektiv (24) angeordnet ist, und dass der Umlenkspiegel (23) relativ zum Lichteintrittsfenster (26) feststehend angeordnet ist.

3. Vorrichtung nach Anspruch 2, **dadurch gekennzeichnet, dass** die Farbfilter (22) an einem innerhalb des Tubus (25) rotierbaren Filterkäfig (29) angeordnet sind, an dessen Umfang neben den Filtern (22) für die drei Grundfarben Rot, Grün und Blau auch ein Bereich vorgesehen ist, welcher im Deckungszustand mit dem Lichteintrittsfenster (26) den Lichtdurchgang blockiert.

4. Vorrichtung nach Anspruch 3, **dadurch gekennzeichnet, dass** der Filterkäfig (29) einen weiteren Bereich umfasst, welcher bei Deckung mit dem Lichteintrittsfenster das von der Kathodenstrahlröhre kommende Licht ungehindert zum Umlenkspiegel (23) passieren lässt.

5. Vorrichtung nach Anspruch 3 oder 4, **dadurch gekennzeichnet, dass** der Filterkäfig (29) mit außerhalb des Tubus (25) angeordneten Antriebsmitteln (6), vorzugsweise automatisch, rotierbar ist.

6. Vorrichtung nach Anspruch 5, **dadurch gekennzeichnet, dass** der Antrieb des Filterkäfigs (29) und der Verstelltrieb des Objektivtellers (39) derart miteinander gekoppelt sind, dass ein Verdrehen des Filterkäfigs (29) in die eine Richtung eine Verstellung des Objektivtellers (39) und damit einen Objektivwechsel bewirkt, während eine Rotation des Filterkäfigs (29) in die Gegenrichtung über einen Freilauf entkoppelt vom Objektivteller (39) erfolgt und die Stellung des Objektivtellers (39) nicht verändert.

7. Vorrichtung nach einem der Ansprüche 2 bis 5, **dadurch gekennzeichnet, dass** an dem einen stirnseitigen Ende (27) des Tubus (25) ein rotierbarer tellerartiger Objektivträger (39) angeordnet ist, der zur Aufnahme mehrerer verschiedener Objektive (49, 41, 42) für unterschiedliche Abbildungsmaßstäbe ausgebildet ist, die wahlweise, vorzugsweise automatisch, in den Belichtungsstrahlengang (E) einschwenkbar sind.

8. Vorrichtung nach Anspruch 6, **dadurch gekennzeichnet, dass** der Filterkäfig (29) starr mit einem Zahnrad (31) verbunden ist, welches an einen innerhalb des Geräts angeordneten Antriebsmotor (6) ankuppelbar ist.

9. Vorrichtung nach Anspruch 8, **dadurch gekennzeichnet, dass** der Antriebsmotor (6) bei einem in den Belichtungsstrahlengang (E) eingeschwenkten, der ersten Belichtungseinrichtung (1) zugehörigen Variobjektiv für die Verstellung der Brennweite des Varioobjektivs vorgesehen ist, und bei in den Belichtungsstrahlengang (E) eingeschwenkter Abbildungsoptik (21) für die Kathodenstrahlröhre (20) den Filterkäfig (29) antreibt bzw. für den Objektivwechsel sorgt.

10. Vorrichtung nach einem der Ansprüche 1 bis 9, **dadurch gekennzeichnet, dass** das bzw. die der ersten Belichtungseinrichtung (1) zugehörige(n) Abbildungsobjetiv(e) (11) und die zur zweiten Belichtungseinrichtung (2) gehörige Abbildungsoptik (21) über das Objektivkarussell (4) automatisch in den Belichtungsstrahlengang (E) einschwenkbar sind, wobei automatisch zwischen der zugehörigen ersten oder zweiten Belichtungseinrichtung umgeschaltet wird.

11. Vorrichtung nach einem der vorangehenden Ansprüche, **dadurch gekennzeichnet, dass** sie zusätzliche mit einem Filmöffnungs- und Spleissmodul, einem Filmentwicklermodul, einem Papierentwicklermodul und einem Papierschneide- und Fotoausgabemodul ausgestattet ist, und dass das gesamte Gerät als Kompaktlabor ausgebildet ist.

## Claims

1. Photographic copying unit, comprising an exposure device (1) for exposing photographic negative or positive originals (N) and a second exposure device (2) for exposing image screen originals (46) onto photographic copying material (P), the second exposure device (2) comprising a cathode ray tube (20), including actuation system, arranged approximately at right angles to the exposure beam path (E) of the first exposure device (1), an arrangement of colour filters (22), a lens (24) and a deflection mirror (23), by means of which the image screen original (46) emitted by the cathode ray tube (20) can be deflected onto the photographic copying material (P), **characterised in that** the colour filter arrangement (22), the lens (24) and the deflection mirror (23) are adjusted and assembled relative to one another in such a way that these are combined to form imaging optics (21) as a structural unit which can be optionally brought into the exposure beam path (E) instead of an imaging lens (11) associated with the first exposure device (1) and the imaging lens(es) (11) associated with the first exposure device (1) and the imaging optics (21) associated with the second exposure device (2) are fastened to a lens carousel (4) and can be pivoted into the exposure beam path (E).

2. Appliance according to Claim 1, **characterised in that** the colour filter arrangement (22), the lens (24) and the deflection mirror (23) are arranged in a light-tight tube (25), in whose shell is provided a light inlet window (26) which, in the operating position, faces towards the image screen (46) of the cathode ray tube (20), and on whose end (27) is arranged the lens (24), and **in that** the deflection mirror (23) is arranged so that it is fixed relative to the light inlet window (26).

3. Appliance according to Claim 2, **characterised in that** the colour filters (22) are arranged on a filter cage (29) which can rotate within the tube (25), the periphery of which filter cage (29) is provided, in addition to the filters (22) with the three basic colours of red, green and blue, with a region which, in the condition congruent with the light inlet window (26), blocks the passage of light.

4. Appliance according to Claim 3, **characterised in that** the filter cage (29) comprises a further region which, when in congruence with the light inlet window, lets the light coming from the cathode ray tube pass unhindered to the deflection mirror (23).

5. Appliance according to Claim 3 or 4, **characterised in that** the filter cage (29) can be rotated, preferably automatically, by means of drive means (6) arranged outside the tube (25).

6. Appliance according to Claim 5, **characterised in that** the drive of the filter cage (29) and the adjustment drive of the lens plate (39) are coupled together in such a way that a rotation of the filter cage (29) in one direction causes an adjustment of the lens plate (39) and therefore a change in lens, whereas a rotation of the filter cage (29) in the opposite direction takes place decoupled from the lens plate (39) by means of a free-wheel and does not change the position of the lens plate (39).

7. Appliance according to one of Claims 2 to 5, **characterised in that** a rotatable plate-type lens carrier (39) is arranged on the one end (27) of the tube (25), which lens carrier (39) is configured for the accommodation of a plurality of different lenses (49, 41, 42) for different imaging scales, which lenses can be pivoted, preferably automatically, into the exposure beam path (E).

8. Appliance according to Claim 6, **characterised in that** the filter cage (29) is rigidly connected to a gearwheel (31), which can be coupled to a drive motor (6) arranged within the unit.

9. Appliance according to Claim 8, **characterised in that** in the case of a vario-lens associated with the first exposure device (1) and pivoted into the exposure beam path (E), the drive motor (6) is provided for the adjustment of the focal distance of the vario-lens and, in the case of imaging optics (21) for the cathode ray tube (20) pivoted into the exposure beam path (E), it drives the filter cage (29) and/or ensures the change of lens.

10. Appliance according to one of Claims 1 to 9, **characterised in that** the imaging lens(es) (11) associated with the first exposure device (1) and the imaging optics (21) associated with the second exposure device (2) can be pivoted automatically into the exposure beam path (E) by means of the lens carousel (4), switching taking place automatically between the associated first or second exposure devices.

11. Appliance according to one of the preceding claims, **characterised in that** it is additionally equipped with a film opening and splicing module, a film development module, a paper development module and a paper cutting and photograph output module, and **in that** the complete unit is configured as a compact laboratory

## Revendications

1. Tireuse photographique comportant un premier dispositif d'insolation (1) pour insoler des originaux photographiques négatifs ou positifs (N) et un deuxième dispositif d'insolation (2) pour reporter des originaux d'écran (46) sur un matériel de tirage photographique (P), le deuxième dispositif d'insolation (2) comportant un tube cathodique (20), disposé à peu près à angle droit par rapport au parcours (E) des rayons d'insolation du premier dispositif d'insolation (1), avec système de commande, un ensemble de filtres couleur (22), un objectif (24) et un miroir de déviation (23), à l'aide duquel l'original d'écran (46), émis par le tube cathodique (20), peut être dirigé vers le matériel photographique de tirage (P), **caractérisé en ce que** l'ensemble de filtres couleur (22), l'objectif (24) et le miroir de déviation (23) sont ajustés les uns par rapport aux autres et assemblés, de sorte que ceux-ci sont réunis en tant qu'unité de construction pour donner une optique de reproduction (21), qui peut être introduite, à la place d'un objectif de reproduction (11), qui fait partie du premier dispositif d'exposition (1), dans le parcours (E) des rayons d'insolation, et le ou les objectif(s) de reproduction (11) qui fait(font) partie du premier dispositif d'insolation (1), ainsi que l'optique de reproduction (21), qui fait partie du deuxième dispositif d'insolation (2), sont fixés à un carrousel d'objectifs (4) et peuvent être pivotés à l'intérieur du parcours (E) des rayons d'insolation.

2. Dispositif selon la revendication 1, **caractérisé en ce que** l'ensemble de filtres couleur (22), l'objectif (24) et le miroir de déviation (23) sont disposés dans un tube (25) étanche à la lumière, dans l'enveloppe duquel est prévue une fenêtre d'entrée de lumière (26) qui est tournée vers l'écran (46) du tube cathodique (20), en position de fonctionnement, et à une extrémité frontale (27) de laquelle est disposé l'objectif (24), et **en ce que** le miroir de déviation (23) est monté fixe par rapport à la fenêtre d'entrée de lumière (26).

3. Dispositif selon la revendication 2, **caractérisé en ce que** les filtres couleur (22) sont disposés sur une cage à filtres (29) tournant à l'intérieur du tube (25), sur le pourtour de laquelle il est prévu, à côté des filtres (22) pour les trois couleurs de base rouge, vert et bleu, également une zone qui bloque le passage de lumière lorsqu'elle recouvre la fenêtre d'entrée de lumière (26).

4. Dispositif selon la revendication 3, **caractérisé en ce que** la cage à filtres (29) comprend une zone plus large qui, lorsqu'elle recouvre la fenêtre d'entrée de lumière, laisse passer librement vers le miroir de déviation (23), la lumière qui provient du tube cathodique.

5. Dispositif selon la revendication 3 ou 4, **caractérisé en ce que** la cage à filtres (29) peut tourner, de préférence automatiquement, avec des moyens d'entraînement (6) disposés à l'extérieur du tube (25).

6. Dispositif selon la revendication 5, **caractérisé en ce que** l'entraînement de la cage à filtres (29) et le mécanisme de déplacement du plateau d'objectif (39) sont accouplés entre eux de manière qu'une rotation de la cage à filtres (29) dans un sens provoque un déplacement du plateau d'objectif (39) et donc un changement d'objectif, tandis qu'une rotation de la cage à filtres (29) dans le sens contraire, s'effectue sur une course libre, désaccouplée du plateau d'objectif (39) et la position du plateau d'objectif (39) ne varie pas.

7. Dispositif selon l'une des revendications 2 à 5, **caractérisé en ce qu'**à une extrémité frontale (27) du tube (25) est disposé un porte-objectif (39) de type plateau rotatif, qui est conçu pour recevoir plusieurs objectifs (49, 41, 42) différents pour des échelles de reproduction différentes, qui peuvent pivoter au choix, de préférence automatiquement, dans le parcours (E) des rayons d'insolation.

8. Dispositif selon la revendication 6, **caractérisé en ce que** la cage à filtres (29) est reliée rigidement à une roue dentée (31) qui peut être accouplée à un moteur d'entraînement (6), disposé à l'intérieur de l'appareil.

9. Dispositif selon la revendication 8, **caractérisé en ce que**, dans le cas d'un objectif variable, qui est pivoté à l'intérieur du parcours (E) des rayons d'insolation et qui fait partie du premier dispositif d'insolation (1), il est prévu le moteur d'entraînement (6) pour le réglage de la distance focale de l'objectif variable, qui, lorsque l'optique de reproduction (21) pour le tube cathodique (20) est pivotée à l'intérieur du parcours (E) des rayons d'exposition, entraîne la cage à filtres (29) ou assure le changement d'objectif.

10. Dispositif selon l'une des revendications 1 à 9, **caractérisé en ce que** le ou les objectif(s) de reproduction (11) qui fait(font) partie du premier dispositif d'insolation (1) et l'optique de reproduction (21), qui fait partie du deuxième dispositif d'insolation (2), peuvent être pivotés automatiquement dans le parcours (E) des rayons d'insolation par le carrousel d'objectifs (4), la commutation entre le premier et le deuxième dispositif d'insolation correspondant s'effectuant automatiquement.

11. Dispositif selon l'une des revendications précédentes, **caractérisé en ce qu'**il est équipé en supplément d'un module d'ouverture de film et d'un module d'épissure, d'un module de développement de film, d'un module de développement de papier et d'un module de coupe de papier et de sortie photo, et **en ce que** l'ensemble de l'appareil est réalisé sous la forme d'un laboratoire compact.
